(19) Europäisches Patentamt
European Patent Office
Office européen des brevets

(11) **EP 2 348 467 B1**

## (12) FASCICULE DE BREVET EUROPEEN

(45) Date de publication et mention
de la délivrance du brevet:
**30.05.2018 Bulletin 2018/22**

(51) Int Cl.:
***G06Q 10/00*** *(2012.01)* ***G06F 17/30*** *(2006.01)*

(21) Numéro de dépôt: **10196501.0**

(22) Date de dépôt: **22.12.2010**

(54) **Procédé de gestion des ressources dans un réseau de télécommunication ou un système informatique**

Verfahren zur Verwaltung von Ressourcen in einem Telekommunikationsnetz oder einem IT-System

Method for resource management in a telecommunications network or a computer system

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.12.2009 FR 0906394**

(43) Date de publication de la demande:
**27.07.2011 Bulletin 2011/30**

(73) Titulaire: **THALES**
**92400 Courbevoie (FR)**

(72) Inventeur: **Rayrole, Martin**
**92320 Chatillon (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A1- 1 443 445 WO-A1-02/089002**
**US-B1- 6 374 249**

• XINFA HU ET AL: "Testing Interval Trees for Real-Time Scheduling Systems", EMBEDDED AND REAL-TIME COMPUTING SYSTEMS AND APPLICATIONS, 2008. RTCSA '08. 14TH IEEE INTERNATIONAL CONFERENCE ON, IEEE, PISCATAWAY, NJ, USA, 25 août 2008 (2008-08-25), pages 327-336, XP031315694, ISBN: 978-0-7695-3349-0
• CORMEN T H ET AL: "Introduction to Algorithms", INTRODUCTION TO ALGORITHMS, MIT PRESS, LONDON, GB, 1 janvier 1991 (1991-01-01), pages 290-294, XP002256850,
• BONGKI MOON ET AL: "Spatiotemporal Aggregate Computation: A Survey", IEEE TRANSACTIONS ON KNOWLEDGE AND DATA ENGINEERING, IEEE SERVICE CENTER, LOS ALAMITOS, CA, US LNKD-DOI:10.1109/TKDE.2005.34, vol. 17, no. 2, 1 février 2005 (2005-02-01), pages 271-286, XP011124657, ISSN: 1041-4347

**Description**

La présente invention concerne un procédé de gestion des ressources dans un réseau de télécommunication ou un système informatique. Elle peut notamment s'appliquer pour réserver de la bande passante sur un lien de communication, ou de l'espace disque sur des serveurs ou encore du temps de calcul sur un processeur.

Les ressources d'un réseau de télécommunication ou d'un système informatique sont souvent partagées entre plusieurs utilisateurs. Lorsque les besoins en ressource peuvent être planifiés, l'administrateur du réseau peut gérer un calendrier de réservation des ressources, de manière à connaître la disponibilité du réseau. Malheureusement, lorsque le nombre de réservations est élevé, les mécanismes existants de gestion de calendrier nécessitent des temps de calcul très longs.

Le brevet US 6,374,249 B1 décrit une structure de données et des opérations pour des variables dépendant du temps dans un modèle d'entreprise. Mais la méthode décrite dans ce brevet n'est pas efficace pour gérer un nombre important de réservations de ressources.

La demande de brevet EP 1443445 A1 décrit un procédé et un dispositif perfectionnés de gestion d'un calendrier de ressources. Mais d'une part, le procédé et le dispositif décrits ne permettent pas de gérer de manière efficace les réservations permanentes, c'est-à-dire sans date de fin. D'autre part, le calendrier décrit est de longueur fixe et ne gère que des périodes temporelles de granularité fixe. Ainsi, dans le cas d'une réservation prise longtemps à l'avance, cela peut avoir comme conséquence d'accepter cette réservation alors que le réseau n'a pas les ressources nécessaires pour la supporter. Enfin, il nécessite périodiquement une opération coûteuse en O(M.log n), où n est la taille du calendrier exprimée en nombre de plus petites périodes représentées dans le calendrier et M est le nombre de réservations faites dans le calendrier.

L'invention a notamment pour but d'optimiser les temps d'exécution des opérations de base sur un calendrier de réservation de ressources, c'est-à-dire l'ajout et la suppression d'une réservation, le calcul de la quantité de ressources disponible et le décalage dans le temps de la période couverte par le calendrier, ceci quels que soient le nombre, la durée et la granularité des réservations. Pour cela, la présente invention propose de construire un arbre dynamique de réservations et de gérer des variables spécifiques aux réservations permanentes, cet arbre et ces variable permettant d'utiliser un algorithme efficace en O(log n) pour les opérations de base. A cet effet, l'invention a pour objet procédé pour partager une quantité de ressources $Q_{total}$ entre plusieurs utilisateurs dans un réseau de télécommunication ou un système informatique à partir d'une date donnée. Le procédé inclut de mettre à jour un arbre dont chaque noeud représente une période temporelle. L'arbre contient au moins un noeud représentant une période temporelle incluant la date donnée. La concaténation des périodes temporelles que représentent les noeuds fils d'un noeud parent représentent la période temporelle que représente ledit noeud parent.

Avantageusement, la mise à jour de l'arbre peut comporter, afin d'enregistrer dans l'arbre une période de réservation P d'une quantité $Q_r$ de ressources par un utilisateur, une étape d'ajout de noeuds dans l'arbre de telle sorte que le noeud racine de l'arbre inclut la date de début de la période P.

L'étape d'ajout de noeuds dans l'arbre peut inclure en outre d'ajouter tous les noeuds minimum de la période de réservation P. Si la période de réservation P est une période non permanente avec une date de fin, un noeud est un noeud minimum de la période de réservation P s'il représente une période temporelle incluse dans la période P et si son noeud parent représente une période temporelle pas entièrement incluse dans la période P. Si la période de réservation P est une période permanente sans date de fin, un noeud est un noeud minimum de la période de réservation P s'il représente une période temporelle incluse dans la période allant de la date de début de la période P jusqu'à la fin de la période temporelle que représente le noeud racine de l'arbre.

Dans un mode de réalisation préférentiel, chaque noeud de l'arbre peut contenir un champ Qn égal à la somme des quantités de ressources réservées pour les réservations ayant ledit noeud parmi ses noeuds minimaux, ainsi qu'un champ Qf égal à zéro si ledit noeud n'a pas de noeud fils ou égal au maximum de Qn + Qf pour tous les noeuds fils dudit noeud si ledit noeud a au moins un noeud fils.

Dans un mode de réalisation préférentiel, le procédé peut comporter une étape de calcul de la quantité $Q_d$ de ressources disponible sur la période de réservation P. Si la date de début de la période P est postérieure à la fin de la période temporelle que représente le noeud racine de l'arbre, alors la quantité $Q_d$ est égale à $Q_{total} - Q_{p0} - Q_{p1}$, où $Q_{p0}$ est une variable égale à la somme des quantités de ressources réservées pour des réservations permanentes ayant le noeud racine de l'arbre comme noeud minimal et $Q_{p1}$ est une variable égale à la somme des quantités de ressources réservées pour des réservations permanentes n'ayant pas le noeud racine de l'arbre comme noeud minimal. Sinon, la quantité $Q_d$ est égale à $Q_{total} - \underset{i \in \{\text{nœuds minimaux de P}\}}{Max} \left( Q_n(i) + Q_f(i) + \sum_{j \in \{\text{parents de i}\}} Q_n(j) \right)$.

La quantité $Q_r$ étant inférieure à la quantité $Q_d$, l'étape d'ajout de noeuds dans l'arbre peut inclure en outre, si un noeud fils d'un noeud existant est ajouté, d'initialiser à la valeur zéro les champs $Q_n$ et $Q_f$ dudit noeud ajouté. Sinon, si un noeud est ajouté et qu'il est le nouveau noeud racine, alors, si l'ancien noeud racine est le fils le plus à gauche du nouveau noeud racine, alors l'étape d'ajout de noeuds dans l'arbre peut inclure d'affecter la valeur de $Q_{p0}$ au champ $Q_n$ de la nouvelle racine et de décrémenter de $Q_{p0}$ le champ $Q_n$ de l'ancienne racine. Sinon, l'étape d'ajout de noeuds dans l'arbre peut inclure d'affecter la valeur zéro au champ $Q_n$ de la nouvelle racine, d'incrémenter de $Q_{p0}$ la variable $Q_{p1}$ et d'affecter la valeur zéro à la variable $Q_{p0}$. Puis, l'étape d'ajout de noeuds dans l'arbre peut inclure d'affecter la somme des champs $Q_n$ et $Q_f$ de l'ancienne racine au champ $Q_f$ de la nouvelle racine, d'ajouter les noeuds frères droits de l'ancienne racine, la valeur de $Q_{p1}$ étant affectée aux champs $Q_n$ desdits noeuds frères droits et la valeur zéro étant affecté aux champs $Q_f$ desdits noeuds frères droits. Si la période P est une période permanente sans date de fin, l'étape d'ajout de noeuds dans l'arbre peut inclure d'incrémenter $Q_{p0}$ de $Q_r$ si la racine de l'arbre est un noeud minimal, d'incrémenter $Q_{p1}$ de $Q_r$ sinon. L'étape d'ajout de noeuds dans l'arbre peut inclure de sommer la quantité $Q_r$ aux champs $Q_n$ de tous les noeuds minimaux de la période P et de mettre à jour les champs $Q_f$ de tous les noeuds parents desdits noeuds minimaux.

Avantageusement là encore, la mise à jour de l'arbre peut comporter, afin de modifier ou supprimer l'enregistrement dans l'arbre de la période de réservation P de la quantité $Q_r$ de ressources, une étape de modification ou de suppression de noeuds dans l'arbre. Cette étape peut inclure de décrémenter de $Q_r$ les champs $Q_n$ de tous les noeuds minimaux de la période P, de mettre à jour le champs $Q_f$ de tous les noeuds parents desdits noeuds minimaux et de supprimer les noeuds feuilles de l'arbre ayant un champ $Q_n$ valant zéro. Si la période P est une période permanente sans date de fin, cette étape peut inclure de décrémenter $Q_{p0}$ de $Q_r$ si la racine de l'arbre est un noeud minimal, de décrémenter $Q_{p1}$ de $Q_r$ sinon.

Avantageusement là encore, la mise à jour de l'arbre peut comporter, afin de purger l'arbre, une étape de suppression des noeuds de l'arbre représentant des périodes temporelles écoulées.

Par exemple, chaque noeud peut représenter une période temporelle d'une durée égale à un nombre d'années ou une fraction d'année, ou un nombre de mois ou une fraction de mois, ou un nombre de jours ou une fraction de jour, ou un nombre d'heures ou une fraction d'heure, ou un nombres de minutes ou une fraction de minute, ou un nombre de secondes ou une fraction de seconde.

Par exemple, la date donnée peut être la date courante, de manière à pouvoir partager la quantité de ressources $Q_{total}$ immédiatement.

Par exemple, la quantité de ressources $Q_{total}$ peut être une quantité de bande passante exprimée en bits par seconde, ou une quantité d'espace disque exprimée en octets ou encore une quantité de temps de calcul d'un processeur exprimée en pourcents.

L'invention a encore pour principaux avantages que, en permettant de mettre spécifiquement des contraintes sur la granularité minimale et la couverture du calendrier, mais pas sur le nombre de réservations, elle permet de borner le temps d'exécution des opérations sur le calendrier. Offrant ainsi des temps de calcul indépendants du nombre de réservations, elle est particulièrement adaptée aux systèmes temps-réel.

D'autres caractéristiques et avantages de l'invention apparaîtront à l'aide de la description qui suit faite en regard de dessins annexés qui représentent :

- la figure 1, un exemple de trame de calendrier selon l'invention;
- la figure 2, un exemple de calendrier selon l'invention.

Dans la suite de la présente demande, le terme « date » est employé au sens large. Par exemple, une date peut s'exprimer sous la forme année/mois/jour/heure/minute/seconde.

Dans le présent exemple de réalisation, une ressource pouvant être représentée par un entier doit être partagée entre plusieurs utilisateurs. Pour planifier l'utilisation de cette ressource, les utilisateurs doivent faire des demandes de réservation. Chaque réservation est définie par plusieurs caractéristiques. Une réservation indique tout d'abord une date de début, qui est supérieure ou égale à une date $D_{min}$ prédéfinie. La valeur de $D_{min}$ peut augmenter au fil du temps, car $D_{min}$ peut, par exemple, correspondre à la date courante. Une réservation peut éventuellement indiquer une date de fin. Si aucune valeur n'est pas fournie pour cette date de fin, la réservation est dite permanente. Une réservation indique également la quantité de ressources à réserver. Par exemple, il peut s'agir de bande passante en bits par secondes sur un lien de communication, ou d'espace disque en octets sur un serveur ou encore de temps de calcul en pourcents sur un processeur.

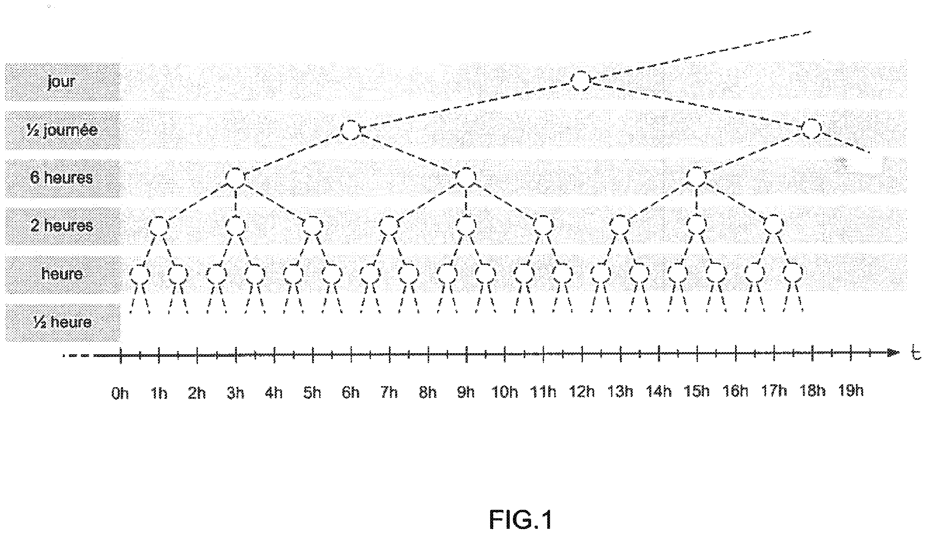

La figure 1 illustre un exemple de trame de calendrier selon l'invention. Un calendrier selon l'invention est une structure arborescente de réservations respectant la trame illustrée par la figure 1. La trame illustrée par la figure 1 peut aussi être vue comme un calendrier vide selon l'invention, dans lequel aucune réservation n'a encore été faite.

Chaque noeud de la trame est illustré par un rond en pointillés et représente une période de temps. Chaque noeud est parent d'un ensemble de noeuds fils, qui représentent chacun une partie de la période de temps du noeud parent. La concaténation de toutes les périodes représentées par les noeuds fils est égale à la période représentée par le noeud parent. Par exemple, chaque jour est représenté par un noeud, qui a lui-même deux noeuds fils représentant chacun une demi-journée, qui ont eux-mêmes chacun deux noeuds fils représentant chacun une période de 6 heures, qui ont eux-mêmes chacun trois noeuds fils représentant chacun une période de 2 heures, qui ont eux-mêmes chacun deux noeuds fils représentant chacun une période de 1 heure. Pour des raisons de clarté, les noeuds représentant des périodes de ½ heure n'ont pas été représentés sur la figure 1. Ainsi, une journée peut être représentée par un nombre de noeuds variant de un à l'infini.

Tout calendrier selon l'invention est l'instance d'une partie de la trame illustrée par la figure 1. Un calendrier selon l'invention est un arbre dont les noeuds sont instanciés de sorte que :

◦ un noeud n'est instanciés que lorsqu'il est nécessaire pour enregistrer une réservation dans le calendrier, comme explicité ci-dessous. L'arbre doit cependant avoir au minimum un noeud qui représente une période de temps incluant la date $D_{min}$ définie précédemment;
◦ il n'y a pas de limite dans la profondeur de l'arbre si aucune contrainte n'est fixée sur les réservations possibles.

Il faut noter que, pour améliorer l'efficacité de l'invention, il est préférable que la trame respecte une découpe du temps usuellement utilisée pour les réservations. Par exemple, il est préférable que les noeuds représentent des jours, des ½ journées et des périodes de 6, 2 et 1 heure plutôt que des 1024ème d'année.

A une période P finie de réservation, c'est-à-dire avec une date de fin, correspond un ensemble de noeuds minimaux dans la trame du calendrier. Un noeud est minimal pour la période P finie si et seulement si ce noeud respecte les deux conditions suivantes :

◦ la période représentée par le noeud est incluse dans la période P;
◦ la période représentée par le noeud parent n'est pas entièrement incluse dans la période P.

A une période P infinie de réservation, c'est-à-dire avec une date de début mais sans date de fin, correspond également un ensemble de noeuds minimaux dans la trame du calendrier. L'ensemble des noeuds minimaux de la période P infinie est égal aux noeuds minimaux de la période allant du début de la période P jusqu'à la fin de la période représentée par la racine de l'arbre. Si la date de début de la période P infinie est postérieure à la période représentée par la racine de l'arbre, alors l'arbre est étendu de manière à ce que la nouvelle racine de l'arbre inclut la date de début de la période P.

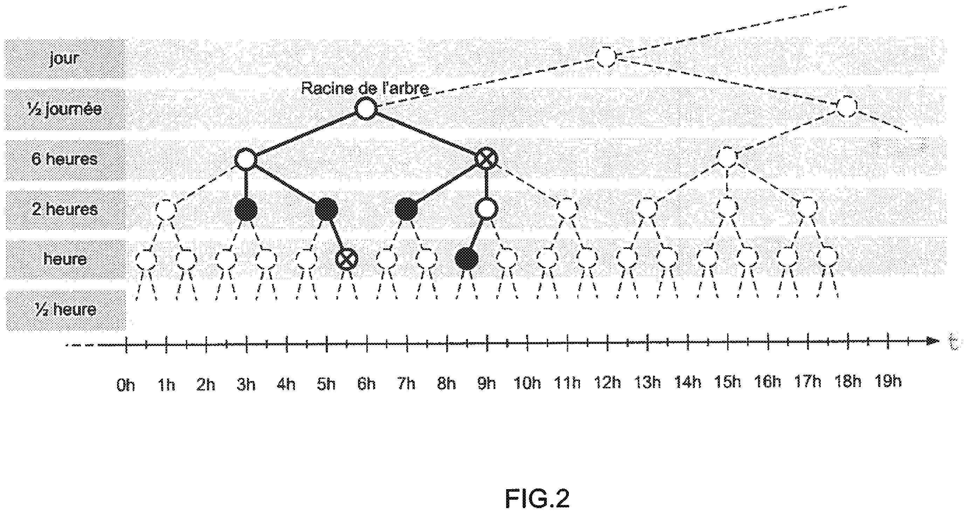

Il faut noter que, comme illustré par l'exemple de la figure 2 ci-dessous, lorsqu'une réservation est ajoutée dans l'arbre, chaque noeud minimal de la période de réservation est instancié dans l'arbre.

La figure 2 illustre un exemple de calendrier selon l'invention contenant une première réservation allant de 2h à 9h et une deuxième réservation permanente commençant à 5h. L'arbre correspondant à ce calendrier est indiqué en traits pleins et épais. La racine de cet arbre est indiquée sur la figure 2. Les noeuds minimaux de la première réservation sont indiqués en noir. Les noeuds minimaux de la deuxième réservation sont indiqués par une croix.

Le nombre de noeuds minimaux pour une réservation est au plus égal à $2.\log_2(n)+2(o-2)$, où n est la taille du calendrier exprimée en nombre de plus petites périodes représentées dans l'arbre, c'est-à-dire la période des feuilles de l'arbre de plus bas niveau, et o est l'ordre de l'arbre. Le parcours de ces noeuds minimaux peut s'effectuer en $O(\log(n))$. Deux valeurs sont mémorisées dans chaque noeud de l'arbre :

◦ $Q_n$ : somme des quantités de ressources réservées pour les réservations ayant ce noeud comme noeud minimal;
◦ $Q_f$ : valeur maximale de $(Q_n+Q_f)$ entre tous les noeuds fils, ou zéro si le noeud n'a pas de fils.

En plus de l'arbre décrit ci-dessus, deux variables entières sont définies :

◦ $Q_{p0}$ est la somme des quantités de ressources réservées pour des réservations permanentes ayant le sommet de l'arbre comme noeud minimal;
◦ $Q_{p1}$ est la somme des quantités de ressources réservées pour des réservations permanentes n'ayant pas le sommet de l'arbre comme noeud minimal.

Ces variables sont utilisées lorsqu'une nouvelle réservation nécessite d'étendre l'arbre pour couvrir une période de temps plus longue, comme explicité ci-dessous.

Avantageusement, la gestion du présent exemple de calendrier selon l'invention peut se faire à partir de quatre opérations de base : calcul de la quantité de ressources disponible sur une période donnée, ajout d'une réservation, suppression d'une réservation et purge du passé. La purge du passé est une opération tout à fait facultative revenant à supprimer la branche la plus à gauche de l'arbre correspondant à la période qui vient de s'écouler. Telles que définies par la suite, chacune de ces opérations peut se faire avec une complexité en temps en $O(\log n)$, où « n » est la taille du calendrier exprimée en nombre de plus petites périodes représentées dans l'arbre, c'est-à-dire la période des feuilles de l'arbre de plus bas niveau.

Avantageusement, l'opération de calcul de la quantité de ressources disponible sur une période P donnée peut s'effectuer de la manière suivante. Tout d'abord, le début de la période P doit être supérieur ou égal à $D_{min}$. La quantité totale de ressources à répartir est notée $Q_{total}$.

Si le début de la période P est supérieure ou égale à la fin de la période couverte par l'arbre, alors la quantité disponible sur la période P est égale à $Q_{Total} - Q_{p0} - Q_{p1}$.

Sinon la quantité disponible sur la période P est égale à :

$$Q_{total} \quad - \underset{i \in \{\text{nœuds minimaux de P}\}}{Max} \left( Q_n(i) + Q_f(i) + \sum_{j \in \{\text{parents de i}\}} Q_n(j) \right)$$

où $Q_n$ et $Q_f$ sont nuls pour les noeuds de la trame qui n'ont pas été instanciés dans l'arbre. Il faut noter que le parcours de l'ensemble des noeuds minimaux peut se faire avec une complexité en temps en $O(\log n)$. Ce parcours s'effectuant depuis la racine de l'arbre, la somme des $Q_n(j)$ se calcule ainsi facilement.

Avantageusement, l'opération d'ajout d'une réservation peut s'effectuer en ajoutant la quantité de ressources réservée aux $Q_n$ de tous les noeuds minimaux de la période de réservation, et en recalculant le $Q_f$ pour tous les parents des noeuds minimaux. Cette opération peut obliger à ajouter des noeuds dans l'arbre. Pour chaque noeud créé:

si le noeud créé est le fils d'un noeud existant, alors les valeurs $Q_n$ et $Q_f$ sont initialisées à zéro;
sinon, le noeud créé est la nouvelle racine de l'arbre et les opérations suivantes sont exécutées dans l'ordre:

si l'ancienne racine est le fils le plus à gauche de la nouvelle racine, alors:

$$Q_n(\text{nouvelle racine}) = Q_{p0};$$

$$Q_n(\text{ancienne racine}) = Q_n(\text{ancienne racine}) - Q_{p0}.$$

sinon:

$$Q_n(\text{nouvelle racine}) = 0;$$

$$Q_{p1} = Q_{p1} + Q_{p0};$$

$$Q_{p0} = 0.$$

$$Q_f(\text{nouvelle racine}) = Q_n(\text{ancienne racine}) + Q_f(\text{ancienne racine}).$$

Les frères droits de l'ancienne racine sont créés avec:

$$Q_n = Q_{p1} ;$$

$$Q_f = 0.$$

Si la nouvelle réservation est permanente, alors la quantité de ressources réservée est ajoutée à $Q_{p0}$ si la racine de l'arbre est un noeud minimal, et à $Q_{p1}$ sinon.

Avantageusement, l'opération de suppression d'une réservation peut s'effectuer en retranchant la quantité de ressources réservée aux $Q_n$ de tous les noeuds minimaux de la période de réservation avec $D_{min}$ comme date minimale,

et en recalculant le $Q_f$ pour tous les parents des noeuds minimaux.

Lors du parcours des noeuds minimaux, les feuilles de l'arbre ayant un $Q_n$ nul peuvent être détruites.

Si la réservation supprimée était permanente, alors la quantité de ressources réservée est retranchée à $Q_{p0}$ si la racine de l'arbre est un noeud minimal, à $Q_{p1}$ sinon.

Avantageusement, l'opération de purge du passé peut permettre de libérer de la mémoire en supprimant les noeuds qui correspondent à une période révolue. Elle est planifiée à la date de fin de la feuille la plus à gauche de l'arbre. $D_{min}$ prend alors cette date de fin comme nouvelle valeur. Comme indiqué précédemment, la nouvelle valeur de $D_{min}$ doit être incluse dans la période couverte par la racine. Si nécessaire, une nouvelle racine peut être créée comme lors de l'ajout d'une réservation. Tous les noeuds de la branche gauche de l'arbre ayant une date de fin inférieure ou égale à $D_{min}$ sont ensuite supprimés. Il faut noter que recalculer le $Q_f$ des noeuds parents n'est pas nécessaire car, du fait de la nouvelle valeur de $D_{min}$, ces noeuds ne pourront plus faire partie des noeuds minimaux d'une réservation.

L'invention décrite précédemment est particulièrement efficace lorsque le nombre de réservations est important.

## Revendications

**1.** Procédé pour partager une quantité de ressources $Q_{total}$ entre plusieurs utilisateurs dans un réseau de télécommunication ou un système informatique à partir d'une date donnée, le procédé incluant de mettre à jour un arbre dont chaque noeud représente une période temporelle, l'arbre contenant au moins un noeud représentant une période temporelle incluant la date donnée, l'arbre contenant un ensemble de noeuds fils qui représentent chacun une partie de la période de temps du noeud parent, la concaténation de toutes les périodes représentées par les noeuds fils est égale à la période représentée par le noeud parent, la mise à jour de l'arbre comportant, afin d'enregistrer dans l'arbre une période de réservation P d'une quantité $Q_r$ de ressources par un utilisateur, une étape d'ajout de noeuds dans l'arbre de telle sorte que le noeud racine de l'arbre inclut la date de début de la période P, le procédé étant **caractérisé en ce que** l'étape d'ajout de noeuds dans l'arbre inclut en outre d'ajouter tous les noeuds minimum de la période de réservation P, un noeud étant un noeud minimum de la période de réservation P si:

- la période de réservation P étant une période non permanente avec une date de fin, ledit noeud représente une période temporelle incluse dans la période P et le noeud parent dudit noeud représente une période temporelle pas entièrement incluse dans la période P;
- la période de réservation P étant une période permanente sans date de fin, ledit noeud représente une période temporelle incluse dans la période allant de la date de début de la période P jusqu'à la fin de la période temporelle que représente le noeud racine de l'arbre et le noeud parent dudit noeud représente une période temporelle pas entièrement incluse dans la période allant de la date de début de la période P jusqu'à la fin de la période temporelle que représente le noeud racine de l'arbre,

un noeud n'étant instancié que lorsqu'il est nécessaire pour enregistrer une réservation dans le calendrier.

**2.** Procédé selon la revendication 1, **caractérisé en ce que** chaque noeud de l'arbre contient:

- un champ $Q_n$ égal à la somme des quantités de ressources réservées pour les réservations ayant ledit noeud parmi ses noeuds minimaux;
- un champ $Q_f$ égal:

    ◦ à zéro si ledit noeud n'a pas de noeud fils;
    ◦ au maximum de $Q_n + Q_f$ pour tous les noeuds fils dudit noeud si ledit noeud a au moins un noeud fils.

**3.** Procédé selon la revendication 2, **caractérisé en ce qu'**il comporte une étape de calcul de la quantité $Q_d$ de ressources disponible sur la période de réservation P, la quantité $Q_d$ étant égale:

- à $Q_{total} - Q_{p0} - Q_{p1}$ si la date de début de la période P est postérieure à la fin de la période temporelle que représente le noeud racine de l'arbre, où:

    ◦ $Q_{p0}$ est une variable égale à la somme des quantités de ressources réservées pour des réservations permanentes ayant le noeud racine de l'arbre comme noeud minimal;
    ◦ $Q_{p1}$ est une variable égale à la somme des quantités de ressources réservées pour des réservations permanentes n'ayant pas le noeud racine de l'arbre comme noeud minimal;

$$- \text{à } Q_{total} \quad - \underset{i \in \{\text{nœuds minimaux de P}\}}{Max} \left( Q_n(i) + Q_f(i) + \sum_{j \in \{\text{parents de i}\}} Q_n(j) \right) \text{sinon.} \text{ sinon.}$$

**4.** Procédé selon la revendication 3, **caractérisé en ce que**, la quantité $Q_r$ étant inférieure à la quantité $Q_d$, l'étape d'ajout de noeuds dans l'arbre inclut en outre:

- si un noeud fils d'un noeud existant est ajouté, d'initialiser à la valeur zéro les champs $Q_n$ et $Q_f$ dudit noeud ajouté;
- sinon, si un noeud est ajouté et qu'il est le nouveau noeud racine, alors:

   ◦ si l'ancien noeud racine est le fils le plus à gauche du nouveau noeud racine, alors:

      ▪ d'affecter la valeur de $Q_{p0}$ au champ $Q_n$ de la nouvelle racine;
      ▪ de décrémenter de $Q_{p0}$ le champ $Q_n$ de l'ancienne racine;

   ◦ sinon:

      ▪ d'affecter la valeur zéro au champ $Q_n$ de la nouvelle racine;
      ▪ d'incrémenter de $Q_{p0}$ la variable $Q_{p1}$;
      ▪ d'affecter la valeur zéro à la variable $Q_{p0}$;

   ◦ d'affecter la somme des champs $Q_n$ et $Q_f$ de l'ancienne racine au champ $Q_f$ de la nouvelle racine;
   ◦ d'ajouter les noeuds frères droits de l'ancienne racine, la valeur de $Q_{p1}$ étant affectée aux champs $Q_n$ desdits noeuds frères droits et la valeur zéro étant affecté aux champs $Q_f$ desdits noeud frères droits;

- si la période P est une période permanente sans date de fin:

   ◦ si la racine de l'arbre est un noeud minimal, d'incrémenter $Q_{p0}$ de $Q_r$;
   ◦ sinon, d'incrémenter $Q_{p1}$ de $Q_r$;

- de sommer la quantité $Q_r$ aux champs $Q_n$ de tous les noeuds minimaux de la période P;
- de mettre à jour les champs $Q_f$ de tous les noeuds parents desdits noeuds minimaux.

**5.** Procédé selon la revendication 3, **caractérisé en ce que** la mise à jour de l'arbre comporte, afin de modifier ou supprimer l'enregistrement dans l'arbre de la période de réservation P de la quantité $Q_r$ de ressources, une étape de modification ou de suppression de noeuds dans l'arbre incluant:

- de décrémenter de $Q_r$ les champs $Q_n$ de tous les noeuds minimaux de la période P;
- de mettre à jour le champs $Q_f$ de tous les noeuds parents desdits noeuds minimaux;
- de supprimer les noeuds feuilles de l'arbre ayant un champ $Q_n$ valant zéro;
- si la période P est une période permanente sans date de fin:

   ◦ si la racine de l'arbre est un noeud minimal, de décrémenter $Q_{p0}$ de $Q_r$;
   ◦ sinon, de décrémenter $Q_{p1}$ de $Q_r$.

**6.** Procédé selon la revendication 1, **caractérisé en ce que** la mise à jour de l'arbre comporte, afin de purger l'arbre, une étape de suppression des noeuds de l'arbre représentant des périodes temporelles écoulées.

**7.** Procédé selon la revendication 1, **caractérisé en ce que** chaque noeud représente une période temporelle d'une durée égale à:

- un nombre d'années ou une fraction d'année, ou;
- un nombre de mois ou une fraction de mois, ou;
- un nombre de jours ou une fraction de jour, ou;
- un nombre d'heures ou une fraction d'heure, ou;
- un nombres de minutes ou une fraction de minute, ou;

- un nombre de secondes ou une fraction de seconde.

8. Procédé selon la revendication 1, **caractérisé en ce que** la date donnée est la date courante, de manière à pouvoir partager la quantité de ressources $Q_{total}$ immédiatement.

9. Procédé selon la revendication 1, **caractérisé en ce que** la quantité de ressources $Q_{total}$ est une quantité de bande passante exprimée en bits par seconde, ou une quantité d'espace disque exprimée en octets ou une quantité de temps de calcul d'un processeur exprimée en pourcents.

## Patentansprüche

1. Verfahren zum gemeinsamen Nutzen einer Menge von Ressourcen $Q_{total}$ zwischen mehreren Benutzern in einem Telekommunikationsnetzwerk oder einem Informatiksystem beginnend an einem gegebenen Zeitpunkt, wobei das Verfahren das Aktualisieren eines Baums beinhaltet, von dem jeder Knoten eine Zeitperiode repräsentiert, wobei der Baum wenigstens einen Knoten enthält, der eine den gegebenen Zeitpunkt enthaltende Zeitperiode repräsentiert, wobei der Baum einen Satz von Kindknoten enthält, die jeweils einen Teil der Zeitperiode des Elternknotens repräsentieren, wobei die Verkettung aller durch die Kindknoten repräsentierten Perioden gleich der durch den Elternknoten repräsentierten Periode ist, wobei das Aktualisieren des Baums, zum Registrieren einer Reservierungspe-riode P einer Menge $Q_r$ von Ressourcen in dem Baum durch einen Benutzer, einen Schritt des Hinzufügens von Knoten zu dem Baum beinhaltet, so dass der Wurzelknoten des Baums die Anfangszeit der Periode P enthält, wobei das Verfahren **dadurch gekennzeichnet ist, dass** der Schritt des Hinzufügens von Knoten zu dem Baum ferner das Hinzufügen aller Mindestknoten der Reservierungsperiode P beinhaltet, wobei ein Knoten ein Mindestknoten der Reservierungperiode P ist, wenn:

- die Reservierungsperiode P eine nicht permanente Periode mit einer Endzeit ist, der Knoten eine in der Periode P enthaltene Zeitperiode ist und der Elternknoten des Knotens eine Zeitperiode repräsentiert, die nicht ganz in der Periode P enthalten ist;
- die Reservierungsperiode P eine permanente Periode ohne Endzeit ist, wobei der Knoten eine Zeitperiode repräsentiert, die in der Periode enthalten ist, die von der Anfangszeit der Periode P bis zum Ende der Zeitperiode geht, die der Wurzelknoten des Baums repräsentiert, und der Elternknoten des Knotens eine Zeitperiode repräsentiert, die nicht ganz in der Periode enthalten ist, die von der Anfangszeit der Periode P bis zum Ende der Zeitperiode geht, die der Wurzelknoten des Baums repräsentiert,

wobei ein Knoten nur dann instanziiert wird, wenn dies notwendig ist, um eine Reservierung im Kalender zu registrieren.

2. Verfahren nach Anspruch 1, **dadurch gekennzeichnet, dass** jeder Knoten des Baums Folgendes enthält:

- ein Feld $Q_n$ gleich der Summe von Mengen von für die Reservierungen reservierten Ressourcen, das den Knoten unter seinen Mindestknoten hat;
- ein Feld $Q_f$ von gleich:

  ◦ null, wenn der Knoten keinen Kindknoten hat;
  ◦ maximal $Q_n + Q_f$ für alle Kindknoten des Knotens, wenn der Knoten wenigstens einen Kindknoten hat.

3. Verfahren nach Anspruch 2, **dadurch gekennzeichnet, dass** es einen Schritt des Berechnens der Menge $Q_d$ von verfügbaren Ressourcen in der Reservierungsperiode P beinhaltet, wobei die Menge $Q_d$ wie folgt ist:

- gleich $Q_{total} - Q_{p0} - Q_{p1}$, wenn die Anfangszeit der Periode P später ist als das Ende der Zeitperiode, die der Wurzelknoten des Baums repräsentiert, wobei:

  ◦ $Q_{p0}$ eine Variable gleich der Summe von Mengen von für die permanenten Reservierungen reservierten Ressourcen mit dem Wurzelknoten des Baums als Mindestknoten ist;
  ◦ $Q_{p1}$ eine Variable gleich der Summe der Mengen an für die permanenten Reservierungen reservierten Ressourcen mit dem Wurzelknoten des Baums als Mindestknoten ist;

- andernfalls gleich $Q_{total} - \underset{i \in \{ \text{Mindestknoten von P} \}}{Max} \left( Q_n(i) + Q_f(i) + \sum_{j \in \{ \text{Eltern von i} \}} Q_n(j) \right)$.

**4.** Verfahren nach Anspruch 3, **dadurch gekennzeichnet, dass**, da die Menge $Q_r$ kleiner ist als die Menge $Q_d$, der Schritt des Hinzufügens von Knoten in dem Baum ferner Folgendes beinhaltet:

- wenn ein Kindknoten eines existierenden Knotens hinzugefügt wird, Initialisieren der Werte $Q_n$ und $Q_f$ des hinzugefügten Knotens auf den Wert null;
- andernfalls, wenn ein Knoten hinzugefügt wird und er der neue Wurzelknoten ist:

  ◦ wenn der alte Wurzelknoten das Kind ganz links von dem neuen Wurzelknoten ist:

    ▪ Zuordnen des Wertes von $Q_{p0}$ dem Feld $Q_n$ der neuen Wurzel;
    ▪ Dekrementieren des Feldes $Q_n$ der alten Wurzel um $Q_{p0}$;

  ◦ andernfalls:

    ▪ Zuordnen des Wertes null zum Feld $Q_n$ der neuen Wurzel;
    ▪ Inkrementieren der Variablen $Q_{p1}$ um $Q_{p0}$;
    ▪ Zuordnen des Wertes null zu der Variablen $Q_{p0}$;

  ◦ Zuordnen der Summe der Felder $Q_n$ und $Q_f$ der alten Wurzel zum Feld $Q_f$ der neuen Wurzel;
  ◦ Hinzufügen der Bruderknoten rechts von der alten Wurzel, wobei der Wert von $Q_{p1}$ den Feldern $Q_n$ der rechten Bruderknoten zugeordnet wird und der Wert null den Feldern $Q_f$ der rechten Bruderknoten zugeordnet wird;

- wenn die Periode P eine permanente Periode ohne Endzeit ist:

  ◦ wenn die Wurzel des Baums ein Mindestknoten ist, Inkrementieren von $Q_{p0}$ um $Q_r$;
  ◦ andernfalls Inkrementieren von $Q_{p1}$ um $Q_r$;

- Summieren der Menge $Q_r$ zu den Feldern $Q_n$ aller Mindestknoten der Periode P;
- Aktualisieren der Felder $Q_f$ aller Elternknoten der Mindestknoten.

**5.** Verfahren nach Anspruch 3, **dadurch gekennzeichnet, dass** das Aktualisieren des Baums, zum Modifizieren oder Unterdrücken der Registrierung im Baum der Reservierungsperiode P der Menge $Q_r$ von Ressourcen, einen Schritt des Modifizierens oder Unterdrückens von Knoten in dem Baum wie folgt beinhaltet:

- Dekrementieren der Felder $Q_n$ aller Mindestknoten der Periode P um $Q_r$;
- Aktualisieren der Felder $Q_f$ aller Elternknoten der Mindestknoten;
- Unterdrücken der Blattknoten des Baums mit einem Feld $Q_n$ mit dem Wert null;
- wenn die Periode P eine permanente Periode ohne Endzeit ist:

  ◦ wenn die Wurzel des Baums ein Mindestknoten ist, Dekrementieren von $Q_{p0}$ um $Q_r$;
  ◦ andernfalls Dekrementieren von $Q_{p1}$ um $Q_r$.

**6.** Verfahren nach Anspruch 1, **dadurch gekennzeichnet, dass** das Aktualisieren des Baums, zum Bereinigen des Baums, einen Schritt des Unterdrückens der Knoten des Baums beinhaltet, die verstrichene Zeitperioden repräsentieren.

**7.** Verfahren nach Anspruch 1, **dadurch gekennzeichnet, dass** jeder Knoten eine Zeitperiode repräsentiert mit einer Dauer von gleich:

- einer Anzahl von Jahren oder einem Bruchteil eines Jahrs, oder;
- einer Anzahl von Monaten oder einem Bruchteil eines Monats, oder;
- einer Anzahl von Tagen oder einem Bruchteil eines Tages, oder;

- einer Anzahl von Stunden oder einem Bruchteil von Stunden, oder;
- einer Anzahl von Minuten oder einem Bruchteil einer Minute, oder;
- einer Anzahl von Sekunden oder einem Bruchteil einer Sekunde.

8. Verfahren nach Anspruch 1, **dadurch gekennzeichnet, dass** der gegebene Zeitpunkt der aktuelle Zeitpunkt ist, um die Menge an Ressourcen $Q_{total}$ sofort gemeinsam nutzen zu können.

9. Verfahren nach Anspruch 1, **dadurch gekennzeichnet, dass** die Menge an Ressourcen $Q_{total}$ eine Menge an Passband, ausgedrückt in Bits pro Sekunde, oder eine Menge an Speicherplatz ist, ausgedrückt in Oktetts, oder eine Menge an Rechenzeit eines Prozessors ist, ausgedrückt in Prozent.

**Claims**

1. A method for sharing an amount of resources $Q_{total}$ between a plurality of users in a telecommunication network or a computing system beginning from a given date, the method comprising updating a tree, each node of which represents a time period, the tree containing at least one node representing a time period including the given date, the tree containing a set of son nodes that each represent part of the time period of the parent node, the concatenation of all the time periods represented by the son nodes is equal to the period represented by the parent node, the updating of the tree comprising, in order to record in the tree, a reservation period P for an amount $Q_r$ of resources by a user, a step of adding nodes to the tree such that the root node of the tree includes the start date of the period P, the method being **characterised in that** the step of adding nodes to the tree also comprises adding all the minimum nodes of the reservation period P, a node being a minimum node of the reservation period P if:

- with the reservation period P being a non-permanent period with an end date, said node represents a time period that is included within the period P and the parent node of said node represents a time period that is not fully included within the period P;
- with the reservation period P being a permanent period with no end date, said node represents a time period that is included within the period starting from the start date of the period P up to the end of the time period that represents the root node of the tree and the parent node of said node represents a time period that is not fully included within the period starting from the start date of the period P up to the end of the time period that represents the root node of the tree,

with a node only being instantiated when it is necessary for recording a reservation in the calendar.

2. The method as claimed in claim 1, **characterised in that** each node of the tree contains:

- a field $Q_n$ equal to the sum of the amounts of resources reserved for the reservations having said node among its minimum nodes;
- a field $Q_f$ equal:

  ◦ to zero if said node has no son node;
  ◦ to the maximum of $Q_n + Q_f$ for all the son nodes of said node if said node has at least one son node.

3. The method as claimed in claim 2, **characterised in that** it comprises a step of computing the amount $Q_d$ of resources available over the reservation period P, the amount $Q_d$ being equal:

- to $Q_{total} - Q_{p0} - Q_{p1}$ if the start date of the period P is after the end of the time period that the root node of the tree represents, where:

  ◦ $Q_{p0}$ is a variable equal to the sum of the amounts of resources reserved for permanent reservations having the root node of the tree as minimum node;
  ◦ $Q_{p1}$ is a variable equal to the sum of the amounts of resources reserved for permanent reservations not having the root node of the tree as minimum node;

- to $Q_{total} - \underset{i \in \{\text{minimum nodes of P}\}}{Max}\left(Q_n(i) + Q_f(i) + \sum_{j \in \{\text{parents of i}\}} Q_n(j)\right)$ otherwise.

4.   The method as claimed in claim 3, **characterised in that**, with the amount $Q_r$ being less than the amount $Q_d$, the step of adding nodes to the tree also comprises:

- if a son node of an existing node is added, initialising the fields $Q_n$ and $Q_f$ of said added node at a zero value;
- otherwise, if a node is added and if it is the new root node, then:

   ∘ if the old root node is the leftmost son of the new root node, then:

      ▪ assigning the value of $Q_{p0}$ to the field $Q_n$ of the new root;
      ▪ decrementing the field $Q_n$ of the old root by $Q_{p0}$;

   ∘ otherwise:

      ▪ assigning a zero value to the field $Q_n$ of the new root;
      ▪ incrementing the variable $Q_{p1}$ by $Q_{p0}$;
      ▪ assigning a zero value to the variable $Q_{p0}$;

   ∘ assigning the sum of the fields $Q_n$ and $Q_f$ of the old root to the field $Q_f$ of the new root;
   ∘ adding the right-hand brother nodes of the old root, with the value of $Q_{p1}$ being assigned to the fields $Q_n$ of said right-hand brother nodes and a zero value being assigned to the fields $Q_f$ of said right-hand brother nodes;

- if the period P is a permanent period with no end date:

   ∘ if the root of the tree is a minimum node, incrementing $Q_{p0}$ by $Q_r$;
   ∘ otherwise, incrementing $Q_{p1}$ by $Q_r$;

- adding the amount $Q_r$ to the fields $Q_n$ of all the minimum nodes of the period P;
- updating the fields $Q_f$ of all the parent nodes of said minimum nodes.

5.   The method as claimed in claim 3, **characterised in that** the updating of the tree comprises, so as to modify or suppress the recording in the tree of the reservation period P of the amount $Q_r$ of resources, a step of modifying or suppressing nodes in the tree comprising:

- decrementing the fields $Q_n$ of all the minimum nodes of the period P by $Q_r$;
- updating the field $Q_f$ with all the parent nodes of said minimum nodes;
- suppressing the leaf nodes of the tree having a field $Q_n$ equal to zero;
- if the period P is a permanent period with no end date:

   ∘ if the root of the tree is a minimum node, decrementing $Q_{p0}$ by $Q_r$;
   ∘ otherwise, decrementing $Q_{p1}$ by $Q_r$.

6.   The method as claimed in claim 1, **characterised in that** the updating of the tree comprises, so as to purge the tree, a step of suppressing nodes from the tree, representing elapsed time periods.

7.   The method as claimed in claim 1, **characterised in that** each node represents a time period with a duration equal to:

- a number of years or a fraction of a year; or
- a number of months or a fraction of a month; or
- a number of days or a fraction of a day; or
- a number of hours or a fraction of an hour; or
- a number of minutes or a fraction of a minute; or
- a number of seconds or a fraction of a second.

8.   The method as claimed in claim 1, **characterised in that** the given date is the current date, in order to be able to immediately share the amount of resources $Q_{total}$.

9.   The method as claimed in claim 1, **characterised in that** the amount of resources $Q_{total}$ is an amount of bandwidth expressed in bits per second, or an amount of disk space expressed in bytes or an amount of computation time of a processor expressed as a percent.

FIG.1

EP 2 348 467 B1

jour

½ journée

6 heures

2 heures

heure

½ heure

Racine de l'arbre

0h 1h 2h 3h 4h 5h 6h 7h 8h 9h 10h 11h 12h 13h 14h 15h 16h 17h 18h 19h

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6374249 B1
- EP 1443445 A1